# EUROPEAN PATENT APPLICATION

(11) **EP 3 351 896 A1**
(43) Date of publication of application: **25.07.2018**
(21) Application number: 18151764.0
(22) Date of filing: 16.01.2018
(51) Int. Cl.: G01B 21/04, G01B 11/00, G01B 11/24

(54) **METHOD OF MAKING A COMPONENT WITH AN INTEGRAL STRAIN INDICATOR**

(30) Priority: 23.01.2017 US 201715412110
(71) Applicant: General Electric Company, Schenectady, NY 12345 (US)
(72) Inventor: KOTTILINGAM, Srikanth Chandrudu, Greenville, SC 9615 (US); RANSON, William F., Greenville, SC 29615 (US); TOLLISON, Brian Lee, Greenville, SC 29615 (US); CUI, Yan, Greenville, SC 29615 (US); APPLEGREN, Christine K., Greenville, SC 29615 (US)
(74) Representative: Foster, Christopher Michael

(57) **Abstract**

A method (200) of making a component (10) with an integral passive strain indicator includes forming (210) the component (10) of a single uniform material, the component (10) comprising an outer surface (14) and an internal volume (15). The method (200) also includes forming (220) a plurality of fiducial markers (12) of the single uniform material on a portion (18) of the outer surface (14) during formation of the component (10), the portion (18) of the outer surface (14) comprising an analysis region (17) on the outer surface (14) of the component (10).

## Description

### FIELD

The present disclosure relates generally to methods for monitoring component strain, and methods for making a component with an integral passive strain indicator.

### BACKGROUND

Throughout various industrial applications, apparatus components are subjected to numerous extreme conditions (e.g., high temperatures, high pressures, large stress loads, etc.). Over time, an apparatus's individual components may suffer creep and/or deformation that may reduce the component's usable life. Such concerns might apply, for instance, to some turbomachines.

Turbomachines are widely utilized in fields such as power generation and aircraft engines. For example, a conventional gas turbine system includes a compressor section, a combustor section, and at least one turbine section. The compressor section is configured to compress a working fluid (e.g., air) as the working fluid flows through the compressor section. The compressor section supplies a high pressure compressed working fluid to the combustors where the high pressure working fluid is mixed with a fuel and burned in a combustion chamber to generate combustion gases having a high temperature and pressure. The combustion gases flow along a hot gas path into the turbine section. The turbine section utilizes the combustion gases by extracting energy therefrom to produce work. For example, expansion of the combustion gases in the turbine section may rotate a shaft to power the compressor, an electrical generator, and other various loads.

During operation of a turbomachine, various components within the turbomachine and particularly components along the hot gas path such as turbine blades within the turbine section of the turbomachine, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation.

### BRIEF DESCRIPTION

Aspects and advantages of the invention will be set forth in part in the following description, or may be obvious from the description, or may be learned through practice of the invention.

In accordance with one embodiment of the present disclosure, a method of making a component with an integral passive strain indicator is provided. The method includes forming the component of a single uniform material, the component including an outer surface and an internal volume. The method further includes forming a plurality of fiducial markers of the single uniform material. The fiducial markers are formed on a portion of the outer surface during formation of the component. The portion of the outer surface includes an analysis region on the outer surface of the component.

In accordance with another embodiment of the present disclosure, a gas turbine component with an integral passive strain indicator is provided. The gas turbine component includes an outer surface, a first side, and a second side. A plurality of fiducial markers is integrally formed on a portion of the outer surface. The portion of the outer surface is disposed on only one of the first side or the second side.

In accordance with another embodiment of the present disclosure, a method of evaluating a component is provided. The method includes initially scanning a plurality of fiducial markers on a portion of an outer surface of the component, creating a unique pattern for the component based on the initial scan, storing the unique pattern in a computer memory, subjecting the component to at least one duty cycle, subsequently scanning the plurality of fiducial markers after the at least one duty cycle, and comparing the unique pattern based on the initial scan to the subsequent scan to measure creep strain on the component.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a perspective view of an exemplary component including a plurality of fiducial markers in accordance with embodiments of the present disclosure;
FIG. 2 is a partial section view of the component of FIG. 1 including a fiducial marker formed thereon in accordance with embodiments of the present disclosure;
FIG. 3 is a perspective view of a system for monitoring component strain in accordance with embodiments of the present disclosure;
FIG. 4 is a an overhead view of a plurality of fiducial markers in accordance with embodiments of the present disclosure;
FIG. 5 is a an overhead view of a plurality of fiducial markers in accordance with embodiments of the present disclosure;
FIG. 6 is a section view of an exemplary fiducial marker at a first time in accordance with embodiments of the present disclosure;
FIG. 7 is section view of the fiducial marker of FIG. 6 at a second time in accordance with embodiments of the present disclosure;
FIG. 8 is a flow chart illustrating a method of making a component in accordance with embodiments of the present disclosure; and
FIG. 9 is a flow chart illustrating a method for evaluating component deformation in accordance with one or more embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

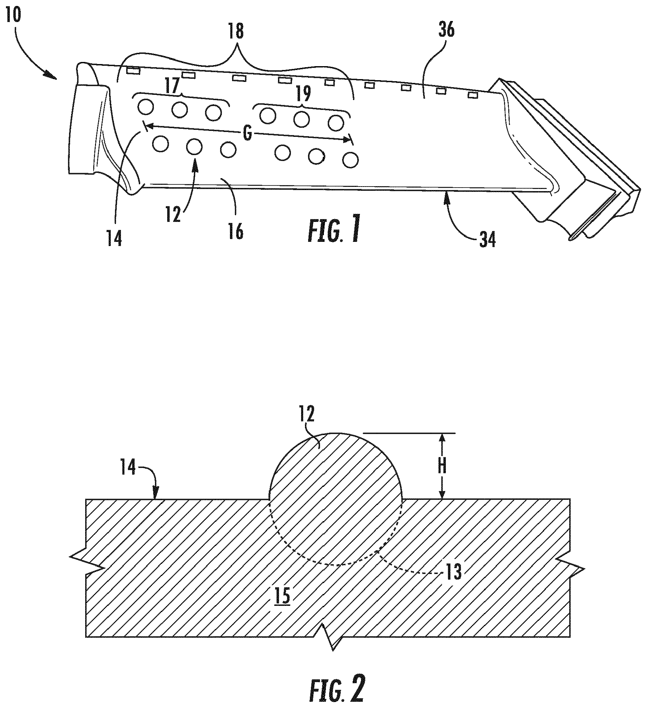

Referring to FIG. 1, an exemplary component 10 is illustrated with a plurality of fiducial markers 12 formed on the component's outer surface 14. The component 10 can be any of a variety of types of components used in a variety of different applications, such as, for example, components utilized in high temperature applications (e.g., components including nickel or cobalt based superalloys). In some embodiments, the component 10 may be an industrial gas turbine or steam turbine component such as a combustion component or hot gas path component. In some embodiments, the component 10 may be a turbine blade, compressor blade, vane, nozzle, shroud, rotor, transition piece or casing. In other embodiments, the component 10 may be any other component of a turbine such as any other component for a gas turbine, steam turbine or the like. In some embodiments, the component may be a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

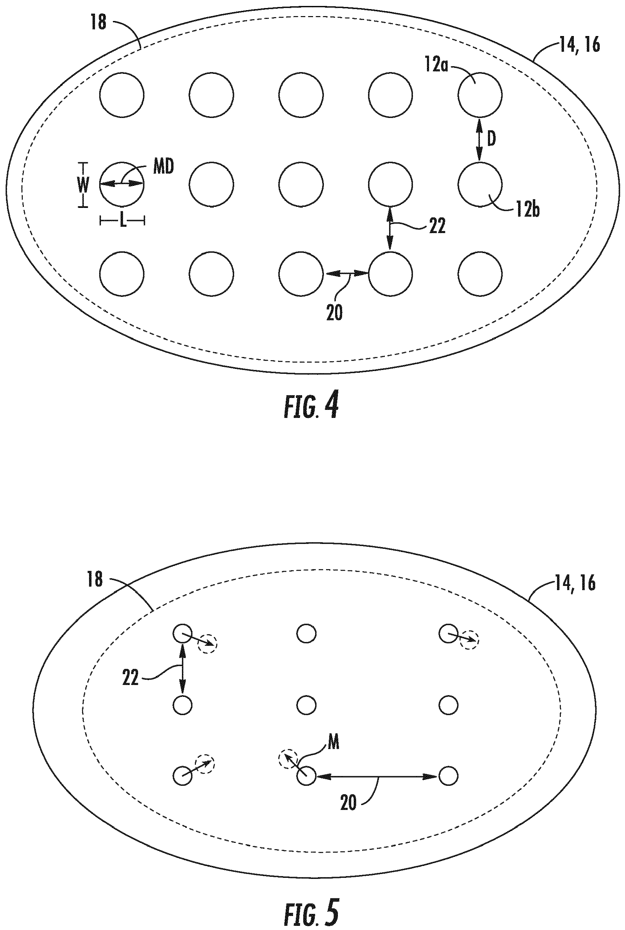

As illustrated for example in FIG. 1, the exemplary component 10 has an outer surface 14 on which the fiducial markers 12 are positioned. The example component 10 shown in the illustrative embodiment of FIG. 1 is a turbine component, more specifically, a turbine blade. However, the component 10 can be various additional or alternative components, as described above. The fiducial markers 12 are generally identifiable targets having a length L and width W (see FIG. 4) across the outer surface 14. Certain fiducial marker 12 embodiments may further include a thickness relative to the outer surface 14, thereby forming an elevated marker surface having a height H (see FIG. 2) above the outer surface 14.

As illustrated for example in FIGS. 1 and 2, the exemplary component 10 has an interior volume 15. Various cooling passages (not shown) may be defined in the interior volume 15. In some embodiments, such as when the component 10 is a turbine blade, suitable materials for the interior volume 15 may include high performance nickel-based superalloys such as GTD-111™, GTD-444™, RENE N5®, R108™, INCONEL™ 738, or single crystal N4 and N5. Alternatively, the turbine blade 10 may be formed from other suitable metal or other materials, such as but not limited to stainless steels, low-alloy steels, or creep-resistant steels. The component 10, including the interior volume 15, outer surface 14, and fiducial markers 12 may be formed as a single continuous piece, where the fiducial markers 12 are formed during formation of the component 10. For example, in some embodiments, the plurality of fiducial markers 12 may be formed on the outer surface 14 during formation of the component 10 such that the outer surface 14, the internal volume 15, and the plurality of fiducial markers 12 are formed of a one-piece, unitary, seamless construction. For example, the component 10 may be formed by casting in a mold, such as by investment casting. Suitable casting methods include, for example, directionally solidified or equiaxed casting. In some exemplary embodiments, directionally solidified casting may be employed to form the component 10 and the fiducial markers 12 thereon as a single crystal, e.g., without internal grain boundaries.

As a result of the casting process, e.g., by an investment casting method, the fiducial markers 12 are integrally joined with the component 10, so as to reduce or minimize movements of the fiducial markers 12 independent or in excess of the component 10. Accordingly, the fiducial markers 12 in accordance with the present disclosure form an integral passive strain indicator of the component 10. Further, casting the fiducial markers 12 on the component 10 may increase durability and reduce the risk that suitable measurement devices will be unable to measure the markers 12 over time. For example, differential thermal expansion between the fiducial markers 12 and the interior volume 15 may be reduced or eliminated as a result of the integral formation of the fiducial markers 12 with the rest of the component 10 as a single continuous piece.

In some exemplary embodiments, such as is illustrated in FIG. 1, the component 10 may have a first side 36 and a second side 34. The plurality of fiducial markers 12 may be disposed on only one side of the component 10, e.g., on only one of the first side 36 or the second side 34. For example, in some embodiments the component 10 may be a gas turbine component, and in particular a hot gas path component. Such exemplary components may include a hot gas path side 36 which is directly contacted by a flow of hot gas through the gas turbine and a non-gas path side 34; the non-gas path side 34 may be generally opposite of the gas path side 36. In some exemplary embodiments, the first side 36 may be a pressure side and the second side 34 may be a suction side, and the portion 18 of the outer surface 14 may be disposed on the pressure 36 side of the outer surface 14. In such exemplary embodiments, locating the portion 18 of the outer surface 14 which includes the plurality of fiducial markers 12 on the hot gas path or pressure side 36 may advantageously provide more accurate and/or earlier indication of strain on the component 10, as the side 36 of component 10 which is directly exposed to the hot gas flow may be more likely to experience creep and/or may experience creep earlier than a relatively cooler side 34 of the component 10 which is downstream or leeward of side 36.

Referring now to FIGS. 1 through 5, the fiducial markers 12 are positioned on a portion 18 of the outer surface 14 of the component 10. In exemplary embodiments, at least two discrete markers (e.g., 12a and 12b) are provided, such that a distance D can be measured between said at least two markers 12a and 12b. As should be appreciated to those skilled in the art, these measurements can help determine the amount of strain, strain rate, creep, fatigue, stress, etc. at that region of the component 10. The at least two discrete markers 12a and 12b can be disposed at a variety of distances and in a variety of locations depending on the specific component 10 so long as the distance D therebetween can be measured.

The fiducial markers 12 may have any suitable shapes, such as dots, lines, circles, rectangles or any other geometrical or non-geometrical shape, so long as they are consistently identifiable and may be used to measure the distance D therebetween. The fiducial markers 12 may form a variety of different configurations and cross-sections such as by incorporating a variety of differently shaped, sized, and positioned fiducial markers 12. For instance, each fiducial marker 12 may include a matched or unique shape. In some embodiments, each marker 12 may define a circular shape, rectangular shape, or linear shape that is the same as (i.e., matched) or unique from another fiducial marker.

In some embodiments, the portion of the outer surface 14 on which the fiducial markers 12 are formed may define an analysis region 17 on the outer surface 14 of the component 10. In such embodiments, the major dimension of the analysis region 17 defines a gage length G of the analysis region 17. In some embodiments which include an analysis region 17 having a gage length G, the fiducial markers 12 may each have a maximum diameter MD (FIG. 4). In various exemplary embodiments, the maximum diameter MD of the markers 12 may be between one hundredth of an inch (0.01") and fifteen hundredths of an inch (0.15"), such as between two hundredths of an inch (0.02") and one eighth of an inch (0.125"). It should be understood that the maximum diameter MD of one fiducial marker 12 may differ from that of other fiducial markers 12, e.g., the maximum diameters MD may all be within the same range but not necessarily equal to one another.

Optionally, the fiducial markers 12 may be positioned in a predetermined reference pattern. For example, the fiducial markers 12 may be arranged as a matrix grid across a defined portion, e.g., analysis region 17, of the exterior surface 14 of the component 10, as illustrated in FIGS. 4 and 5. The matrix grid may include a preselected column spacing 20 and a preselected row spacing 22 to define the distance D between each adjacent marker 12. Moreover, multiple components, or portions of components, may include individualized predetermined reference patterns. In other words, the predetermined reference pattern of one component 10 or portion thereof may be distinguishable and different from the predetermined reference pattern of another component 10 or portion. This may allow discrete components and/or portions to be identified and tracked throughout the life of the component 10.

The preselected column spacing 20 and the preselected row spacing 22 may be the same or different. For example, in some embodiments, the preselected column spacing 20 may be between about one tenth of an inch (0.10") and about one-quarter of an inch (0.25"), such as between about one eighth of an inch (0.125") and about two tenths of an inch (0.20"), such as about eighteen hundredths of an inch (0.18"), while the preselected row spacing 22 may be between about fifteen thousandths of an inch (0.015") and about one tenth of an inch (0.1"), such as between about two hundredths of an inch (0.02") and about eight hundredths of an inch (0.08"). Notably, a relatively large distance D between fiducial markers 12 relative to the size, e.g., the maximum diameter MD, of the fiducial markers 12 may advantageously provide a relatively accurate representation of the strain on the component 10 itself by avoiding or reducing the influence of deformation of the markers 12 on the measured changes resulting from stress and/or strain on the component 10. Thus, as one possible example, the fiducial markers 12 may have a maximum diameter MD of about five hundredths of an inch (0.05") and the distance D between fiducial markers 12 may be about nineteen hundredths of an inch (0.19") in at least one direction, e.g., in exemplary embodiments including a matrix grid arrangement of the fiducial markers 12 in the analysis region 17, one of the preselected column spacing 20 or the preselected row spacing 22 may be at least about nineteen hundredths of an inch (0.19").

In some exemplary embodiments, the portion 18 of the outer surface 14 of the component 10 on which the plurality of fiducial markers 12 are positioned may also include an identification region 19 as well as the analysis region 17. In exemplary embodiments, the identification region 19 includes an individualized predetermined pattern of fiducial markers 12 that is unique to the component 10. The unique pattern of fiducial markers 12 in the identification region 19 may include binary encoded identification data for tracking the component 10. The identification region 19 may be separate from the analysis region 17 in some embodiments, for example as illustrated in FIG. 1. In other exemplary embodiments, the identification region 19 may be coextensive or overlapping with the analysis region 17, or identification region 19 may be a sub-region of analysis region 17.

As noted above, in some embodiments each fiducial marker 12 may have a height H (see FIG. 2) above the outer surface 14. Also as noted above, in certain exemplary embodiments, the component 10 may be a turbine blade or other suitable aerodynamic component. Advantageously, the size of the fiducial markers 12, and the height H in particular, is preferably small enough not to impact the aerodynamics of the component, while also being large enough to measure, as discussed herein. Accordingly, in such exemplary embodiments, the height H of the fiducial markers 12 may be between one thousandth of an inch (0.001") and thirty thousandths of an inch (0.030"), such as between three thousandths of an inch (0.003") and twenty-five thousandths of an inch (0.025"), such as between six thousandths of an inch (0.006") and twenty thousandths of an inch (0.020"), such as between eight thousandths of an inch (0.008") and fifteen thousandths of an inch (0.015").

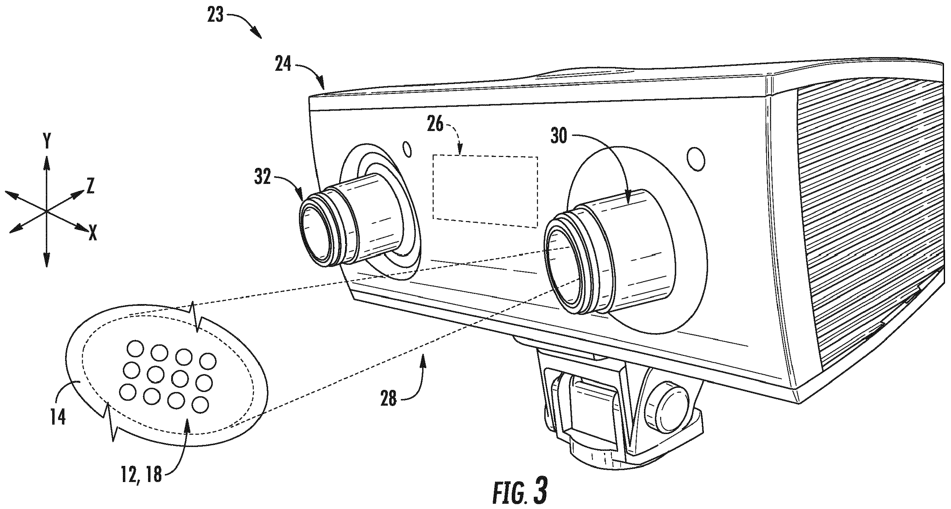

As discussed in more detail below, various embodiments include directly measuring the plurality of fiducial markers 12 using a three-dimensional data acquisition device, such as with an optical scanner 24 (FIG. 3). The optical scanner 24 or other suitable device may, in some embodiments, have a field of view, i.e., a maximum areal extent that the device can capture in a single image or pass. In such embodiments, the gage length G of the analysis region 17 may preferably be at least one-third (1/3) of the field of view longest dimension, e.g., when the field of view is elliptical, the major axis of the ellipse defined by the field of view. For example, as will be discussed in more detail below, in some example embodiments, the optical scanner 24 may be a structured light scanner, and an exemplary embodiment of such scanners may have a sixty millimeter (60mm) field of view. In such embodiments, the gage length G of the analysis region 17 may be at least twenty millimeters (20mm). Further, in such embodiments, the field of view of scanner 24 or other suitable device may provide an upper limit on the size of analysis region 17, e.g., analysis region 17 may be sized such that all of the plurality of fiducial markers 12 can fit within the field of view.

The fiducial markers 12 may be positioned in one or more of a variety of locations on various components. For example, as discussed above, the fiducial markers 12 may be positioned on a turbine blade, vane, nozzle, shroud, rotor, transition piece or casing. In such embodiments, the fiducial markers 12 may be configured in one or more locations known to experience various forces during unit operation such as on or proximate airfoils, platforms, tips or any other suitable location. Moreover, the fiducial markers 12 may be deposited in one or more locations known to experience elevated temperatures. For example, the fiducial markers 12 may be positioned in a hot gas path and/or on a combustion component 10. In some embodiments, the analysis region 17 may include a life-limiting region of the component, e.g., a high stress or high creep region and/or a region with close tolerances or clearances. For example, in embodiments wherein the component 10 is a turbine blade of a gas turbine engine, there may be a close clearance between the turbine blade and a casing of the turbine at or near an outer portion of the blade. As such, the outer portion of the blade may be life-limiting in that deformation of that portion could potentially cause the casing to interfere with rotation of the blade. In other embodiments, the analysis region 17 may include substantially the entire outer surface 14 of component 10. Such embodiments may permit the optional detection of local strain across selective variable sub-portions (e.g., the region between two adjacent markers 12), and/or detection of global strain across the component 10.

The plurality of fiducial markers 12 may be disposed on outer surface 14 of the component 10 in any suitable number and arrangement. For example, providing at least four fiducial markers 12 may advantageously permit a 2D strain field measurement and analysis, and providing at least seven fiducial markers 12 may advantageously permit a 3D strain field measurement and analysis. The fiducial markers 12 may in various exemplary embodiments be arranged along a regular grid, e.g., such that the markers 12 define a rectangular shape. In at least one alternative embodiment, the fiducial markers 12 may be arranged in a linear fashion or other regular pattern. In other alternative embodiments, the fiducial markers 12 may be arranged in a non-linear pattern and/or may define an irregular shape. Various combinations of such embodiments are possible, e.g., four markers may be provided and arranged to form a rectangle or a straight line, or four fiducial markers may be provided in a non-linear pattern. Such examples are for illustration purposes only and not limitation. Any suitable number and arrangement of fiducial markers 12 may be provided in various embodiments.

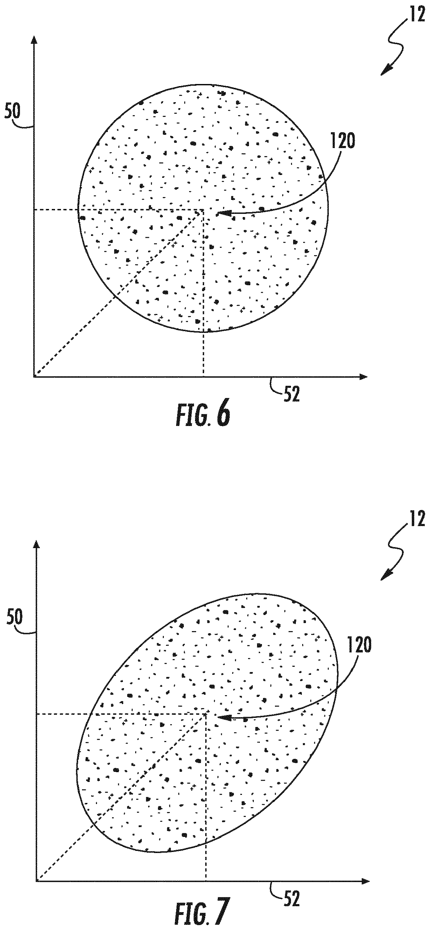

It is possible in various embodiments to measure distances between and/or define locations of the fiducial markers based any of several points thereon, for example a point on an edge or outer surface of the fiducial marker, such as an apex, may be used. In some embodiments, the fiducial marker may be or approximate a portion of a sphere, such as a hemisphere, e.g., each fiducial marker of the plurality of fiducial markers may partially define a spherical surface. In such embodiments, a centroid 120 (FIGS. 6 and 7) or center of mass of the fiducial marker 12 may be used to define the location of the fiducial marker 12 for purposes of analysis. In some such embodiments, the centroid 120 of the fiducial marker 12 for analysis purposes may be the actual centroid defined by the physical geometry of the, e.g., hemispherical, fiducial marker. In other exemplary embodiments, an image processor 26 may calculate or derive a centroid 120 of a complete sphere 13 from the partial, e.g., half, sphere defined by the fiducial marker 12. That is, the centroid of the fiducial marker for analysis purposes in some exemplary methods of monitoring as set forth herein may be a virtual centroid, e.g., the centroid of a sphere, where the fiducial marker defines a portion of the sphere. See, for example, FIG. 2, where fiducial marker 12 defines about half of a sphere 13, the remainder of the sphere 13 indicated by dashed lines below outer surface 14 within interior volume 15.

A centroid in accordance with the present disclosure is a geometric center of a region, which may be a two-dimensional or three-dimensional region, and is thus the arithmetic mean or average position of all points in the shape. In exemplary embodiments, a centroid may be located through use of the imaging device 24 and processor 26. Processor 26, in analyzing an image of, for example, a fiducial marker, may calculate and thus locate the centroid of the fiducial marker, which may be a physical centroid or a virtual centroid, as discussed above.

Using the centroid of the fiducial markers 12 as the reference point for distance measurement may advantageously reduce or minimize error due to deformation of the markers 12. For example, FIG. 6 illustrates an exemplary fiducial marker 12 in an initial condition, e.g., as manufactured, and FIG. 7 illustrates the fiducial marker 12 of FIG. 6 in a subsequent condition, e.g., after the component 10 on which marker 12 is situated has been subjected to at least one duty cycle. In this example, the distance between a point on the edge of marker 12 and another point on an adjacent marker may change merely because the shape of marker 12 changed such that points along the edge or circumference of marker 12 are displaced due to deformation of marker 12 instead of or in addition to any deformation of the component 10. In contrast, the location of the centroid 120 remains relatively constant as compared to the location of points along the edge of the marker 12, and as such a truer picture of the deformation of the component 10 may be obtained by defining the location of each marker 12, and the distances between markers, based on the centroid(s) 120. In FIGS. 6 and 7, the location of centroid 120 is defined in a coordinate system with reference to mutually orthogonal axes 50, 52, which may be any two of the X-axis, Y-axis or Z-axis, as described below and illustrated in FIG. 3. In further exemplary embodiments, the location of centroid 120 may be defined in a three-dimensional coordinate system with reference to all three of the X-axis, Y-axis and Z-axis.

Referring now to FIGS. 1 through 5, an exemplary embodiment of a system for monitoring component deformation is illustrated. Such systems in accordance with the present disclosure may facilitate improved local and/or global strain analysis by measuring fiducial markers 12 along three axes (conventionally termed as an X-axis, Y-axis and Z-axis and which are mutually orthogonal). Movements M (FIG. 5) of the fiducial markers 12 may be tracked in each plane as the system 23 measures the relative displacement of each marker, and thereby the deformation of the component 10, as illustrated in FIG. 4. The system 23 may include, for example, a plurality of fiducial markers 12 which are positioned on the outer surface 14 of one or more components as discussed above. Further, system 23 may include a three-dimensional data acquisition device 24, such as in exemplary embodiments an optical scanner 24 (FIG. 3) for analyzing the fiducial markers 12, and a processor 26 in operative communication with the three-dimensional data acquisition device.

In general, as used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 26 may also include various input/output channels for receiving inputs from and sending control signals to various other components with which the processor 26 is in communication, such as the three-dimensional data acquisition device 24. The processor 26 may further include suitable hardware and/or software for storing and analyzing inputs and data from the three-dimensional data acquisition device 24, and for generally performing method steps as described herein. For example, the processor 26 may have memory associated therewith, e.g., for storing inputs and/or data. The memory may generally be any suitable computer-readable medium or media, including, but not limited to, RAM, ROM, hard drives, flash drives, or other memory devices. As is generally understood, the memory may be configured to store information accessible by the processor(s) 26, including instructions or logic that can be executed by the processor(s) 26.

Notably, processor 26 (or components thereof) may be integrated within the three-dimensional data acquisition device 24. In additional or alternative embodiments, the processor 26 (or components thereof) may be separate from the three-dimensional data acquisition device 24. In exemplary embodiments, for example, processor 26 includes components that are integrated within the three-dimensional data acquisition device 24 for initially processing data received by the three-dimensional data acquisition device 24, and components that are separate from the three-dimensional data acquisition device 24 for measuring the fiducial markers 12 and/or assembling contemporary three-dimensional profiles from the data and comparing these profiles.

In general, processor 26 is operable for directly measuring the fiducial markers 12 along an X-axis, a Y-axis and a Z-axis to obtain X-axis data points, Y-axis data points, and Z-axis data points and create accurate 3D digital replications of the topology of surface 14. As discussed, the axes are mutually orthogonal. The X-axis data points, Y-axis data points, and Z-axis data points are dimensional data points related to the direct measurement of the fiducial markers 12. Processor 26 may further be operable for locating a centroid 120 of each fiducial marker 12, e.g., determining three-dimensional coordinates representing the location of the centroid 120. By scanning the component 10 at various times, e.g., before and after deformation events such as creep, fatigue, and overloads, the component 10 may be monitored for, e.g. stress and/or strain. The three-dimensional data acquisition device 24 may be operable to perform a single three-dimensional scan of the component 10 such that a composite scan is not required or performed. The single three-dimensional scan of the component 10 produces three-dimensional data and permits three-dimensional strain analysis. Exemplary embodiments of such three-dimensional data may include polygon mesh data within three-dimensional point clouds, including centroid coordinates in a three-dimensional space defined by the mutually orthogonal axes X, Y, and Z. Such three-dimensional data may then be input to deformation analysis algorithms to calculate regional surface strain.

In general, any suitable three-dimensional data acquisition device 24 which utilizes surface metrology techniques to obtain direct measurements in three dimensions may be utilized. In exemplary embodiments, device 24 is a non-contact device which utilizes non-contact surface metrology techniques. Further, in exemplary embodiments, a device 24 in accordance with the present disclosure has a resolution along the X-axis, the Y-axis and the Z-axis of between approximately 100 nanometers and approximately 100 micrometers. Accordingly, and in accordance with exemplary methods, the X-axis data points, Y-axis data points, and Z-axis data points are obtained at resolutions of between approximately 100 nanometers and approximately 100 micrometers.

For example, in some embodiments, suitable optical scanners 24 which optically identify fiducial markers 12 in three dimensions may be utilized. FIG. 3 illustrates an exemplary embodiment of an optical scanner 24 in accordance with the present disclosure, wherein the scanner is a structured light scanner. Structured light scanners generally emit light 28 from an included emitter such as light-emitting diodes 30 or other suitable light generating apparatus. In exemplary embodiments, the emitted light 28 utilized by a structured light scanner is blue light or white light. In general, the emitted light 28 is projected onto the fiducial markers 12 and component 10 generally in a particular pattern. When the light 28 contacts the fiducial markers 12 and component 10, the surface contour of the component and fiducial markers 12 distorts the light 28. This distortion may be captured by a detector after the structured light is reflected by the outer surface, e.g., in an image taken by a camera 32. The image of the light 28 contacting the fiducial markers 12 (and surrounding outer surface 14) is received by, for example, the processor 26. The processor 26 then calculates X-axis data points, Y-axis data points, and Z-axis data points based on the received images by, for example, comparing the distortions in the light pattern to the expected pattern. Notably, in exemplary embodiments the processor 26 operates such optical scanners 24 to perform various above disclosed steps.

Alternatively, other suitable data acquisition devices may be utilized. For example, in some embodiments, device 24 is a laser scanner. Laser scanners generally include lasers which emit light in the form of laser beams towards objects, such as in these embodiments fiducial markers 12 and turbine components 10 generally. The light is then detected by a sensor of the device 24. For example, in some embodiments, the light is then reflected off of surfaces which it contacts, and received by a sensor of the device 24. The round-trip time for the light to reach the sensor is utilized to determine measurements along the various axes. These devices are typically known as time-of-flight devices. In other embodiments, the sensor detects the light on the surface which it contacts, and determines measurements based on the relative location of the light in the field-of-view of the sensor. These devices are typically known as triangulation devices. X-axis, Y-axis and Z-axis data points are then calculated based on the detected light, as mentioned. Notably, in exemplary embodiments processor 26 performs and operates such data acquisition devices 24 to perform various above disclosed steps.

In some embodiments, the light emitted by a laser is emitted in a band which is only wide enough to reflect off a portion of object to be measured, such as the plurality of fiducial markers 12. In these embodiments, a stepper motor or other suitable mechanism for moving the laser may be utilized to move the laser and the emitted band as required until light has been reflected off of the entire object to be measured.

Still further, other suitable three-dimensional data acquisition devices 24 may be utilized. Alternatively, however, the present disclosure is not limited to the use of three-dimensional data acquisition devices 24. For example, other suitable devices include electrical field scanners, which may include for example an eddy current coil, a Hall Effect probe, a conductivity probe, and/or a capacitance probe.

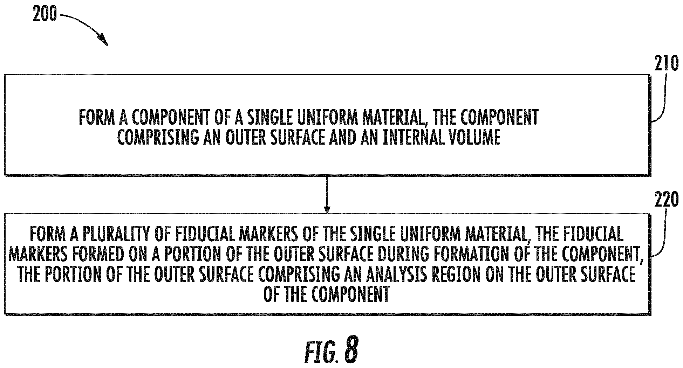

Referring now to FIG. 8, an exemplary method 200 of making a component 10 with an integral passive strain indicator is illustrated. The method 200 includes the step 210 of forming the component of a single uniform material. The component 10 includes an outer surface 14 and an internal volume 15. The method 200 further includes step 220 of forming a plurality of fiducial markers 12 of the single uniform material. The fiducial markers 12 are formed on a portion 18 of the outer surface 14 during formation of the component 10. The portion 18 of the outer surface 14 defines an analysis region 17 on the outer surface 14 of the component 10.

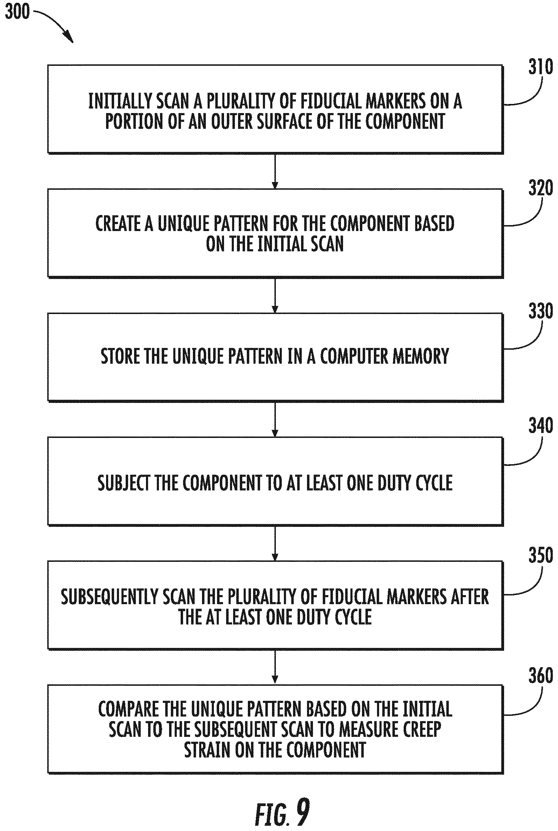

Referring now to FIG. 9, an exemplary method 300 of evaluating a component is illustrated. Such methods 300 in an exemplary embodiment may, in whole or in part, be performed by processors 26 as discussed herein. Method 300 may include the step 310 of initially scanning a plurality of fiducial markers 12 on a portion 18 of the outer surface 14 of the component 10. Method 300 further includes the step 320 of creating a unique pattern for the component 10 based on the initial scan. Step 320 may be accomplished, for example, with scanning software in some embodiments. Method 300 further includes the step 330 of storing the unique pattern in a computer memory. Steps 310, 320, and 330 may occur at a first time. Method 300 further includes the step 340 of subjecting the component 10 to at least one duty cycle, which may occur after the first time. For example, the duty cycle may occur for turbine components as use in service in a turbomachine or other operation. Alternatively, the duty cycle may generally be accomplished through use of the component 10 in the environment for which the component 10 was designed to be utilized. Method 300 further includes the step 350 of subsequently scanning the plurality of fiducial markers 12 after the at least one duty cycle (and at a second time after the first time), such as directly measuring with a three-dimensional data acquisition device 24. Method 300 further includes the step 360 of comparing the unique pattern based on the initial scan to the subsequent scan to measure creep strain on the component.

In some embodiments, the unique pattern based on the initial scan may be a three-dimensional model of the component 10. For example, the three-dimensional model may include a representation of an initial location of each fiducial marker 12, e.g., three-dimensional coordinates representing the location of centroid 120 in a three-dimensional space defined by axes X, Y, and Z, as described above. In some exemplary embodiments, the step of subsequently scanning the plurality of fiducial markers 12 may also include a three-dimensional representation of a location of each fiducial marker 12, e.g., a subsequent location of each fiducial marker 12 at the second time. The three-dimensional representation of the subsequent location of each fiducial marker 12 may be three-dimensional centroid coordinates similar to the representation of the initial location of each fiducial marker 12. Further, in such embodiments of method 300 the step 360 of comparing may include comparing the initial locations of the plurality of fiducial markers to the subsequent locations of the plurality of fiducial markers.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A method of making a component with an integral passive strain indicator, the method comprising:
   forming the component of a single uniform material, the component comprising an outer surface and an internal volume; and
   forming a plurality of fiducial markers of the single uniform material, the fiducial markers formed on a portion of the outer surface during formation of the component, the portion of the outer surface comprising an analysis region on the outer surface of the component.
2. The method of clause 1, wherein forming the plurality of fiducial markers during formation of the component comprises forming the outer surface, the internal volume, and the plurality of fiducial markers as a single continuous piece.
3. The method of clause 1, wherein forming the plurality of fiducial markers during formation of the component comprises forming the outer surface, the internal volume, and the plurality of fiducial markers of a one-piece, unitary, seamless construction.
4. The method of clause 1, wherein forming the component and forming the plurality of fiducial markers during formation of the component comprise casting a metallic material to form the component and the plurality of fiducial markers.
5. The method of clause 1, wherein forming the plurality of fiducial markers on the portion of the outer surface of the component further comprises forming an identification region in the portion of the outer surface, the identification region comprising a pattern of fiducial markers unique to the component.
6. The method of clause 5, wherein the unique pattern of fiducial markers includes binary encoded identification data.
7. The method of clause 5, wherein the identification region is separate from the analysis region.
8. The method of clause 1, further comprising:
   creating a wax model of the component, the model including an outer surface of the model and a plurality of fiducial markers on a portion of the outer surface of the model;
   creating a mold based on the wax model, the mold comprising a refractory material; and
   melting the wax model during the creation of the mold;
   wherein forming the plurality of fiducial markers on a portion of the outer surface during formation of the component comprises casting a metallic material in the mold to form the component, the outer surface of the component, and the plurality of fiducial markers on the portion of the outer surface of the component.
9. A component with an integral passive strain indicator, the component comprising:
   an outer surface;
   a first side;
   a second side; and
   a plurality of fiducial markers integrally formed on a portion of the outer surface, the portion of the outer surface disposed on only one of the first side or the second side.
10. The component of clause 9, wherein the component is a gas turbine component, the first side is a pressure side and the second side is a suction side, and the portion of the outer surface is disposed on the pressure side of the outer surface.
11. The component of clause 9, wherein the component is a hot gas path component of a gas turbine, and the first side is a gas path side, the second side is a non-gas path side, and the portion of the outer surface is disposed on the gas path side.
12. The component of clause 9, wherein the component and the plurality of fiducial markers comprise a single continuous material throughout the component and the fiducial markers.
13. The component of clause 12, wherein the single continuous material is a heat-resistant superalloy.
14. The component of clause 9, wherein the analysis region includes a life-limiting region of the component.
15. The component of clause 9, wherein each fiducial marker of the plurality of fiducial markers partially defines a spherical surface.
16. The component of clause 9, wherein the plurality of fiducial markers are arranged in the analysis region in a matrix grid, the matrix grid having a preselected row spacing and a preselected column spacing.
17. The component of clause 16, wherein the preselected row spacing is not equal to the preselected column spacing.
18. A method of evaluating a component, the method comprising:
   initially scanning a plurality of fiducial markers on a portion of an outer surface of the component;
   creating a unique pattern for the component based on the initial scan;
   storing the unique pattern in a computer memory;
   subjecting the component to at least one duty cycle;
   subsequently scanning the plurality of fiducial markers after the at least one duty cycle; and
   comparing the unique pattern based on the initial scan to the subsequent scan to measure creep strain on the component.
19. The method of clause 18, further comprising subjecting the component to at least one additional duty cycle after subsequently scanning the plurality of fiducial markers when the measured creep strain is below a predetermined threshold and decommissioning the component after subsequently scanning the plurality of fiducial markers when the measured creep strain is above the predetermined threshold.
20. The method of clause 18, wherein the unique pattern comprises a serialization portion and an evaluation portion, the serialization portion comprising a predetermined pattern of fiducial markers corresponding to binary-encoded information which identifies the component.

## Claims

1. A method (200) of making a component (10) with an integral passive strain indicator, the method comprising:
forming (210) the component (10) of a single uniform material, the component (10) comprising an outer surface (14) and an internal volume (15); and
forming (220) a plurality of fiducial markers (12) of the single uniform material, the fiducial markers (12) formed on a portion (18) of the outer surface (14) during formation of the component (10), the portion (18) of the outer surface (14) comprising an analysis region (17) on the outer surface (14) of the component (10).

2. The method (200) of claim 1, wherein forming the plurality of fiducial markers (12) during formation of the component (10) comprises forming the outer surface (14), the internal volume (15), and the plurality of fiducial markers (12) as a single continuous piece.

3. The method (200) of claim 1, wherein forming (220) the plurality of fiducial markers (12) during formation of the component (10) comprises forming the outer surface (14), the internal volume (15), and the plurality of fiducial markers (12) of a one-piece, unitary, seamless construction.

4. The method (200) of any one of claims 1 to 3, wherein forming (210) the component (10) and forming (220) the plurality of fiducial markers (12) during formation of the component (10) comprise casting a metallic material to form the component (10) and the plurality of fiducial markers (12).

5. The method (200) of any one of claims 1 to 4, wherein forming (220) the plurality of fiducial markers (12) on the portion (18) of the outer surface (14) of the component (10) further comprises forming an identification region (19) in the portion (18) of the outer surface (14), the identification region (19) comprising a pattern of fiducial markers (12) unique to the component (10).

6. The method (200) of claim 5, wherein the identification region (19) is separate from the analysis region (17).

7. The method (200) of any one of claims 1 to 6, further comprising:
creating a wax model of the component (10), the model including an outer surface (14) of the model and a plurality of fiducial markers (12) on a portion (18) of the outer surface (14) of the model;
creating a mold based on the wax model, the mold comprising a refractory material; and
melting the wax model during the creation of the mold;
wherein forming the plurality of fiducial markers (12) on a portion (18) of the outer surface (14) during formation of the component (10) comprises casting a metallic material in the mold to form the component (10), the outer surface (14) of the component (10), and the plurality of fiducial markers (12) on the portion (18) of the outer surface (14) of the component (10).

8. A component (10) with an integral passive strain indicator, the component (10) comprising:
an outer surface (14);
a first side (36);
a second side (34); and
a plurality of fiducial markers (12) integrally formed on a portion (18) of the outer surface (14), the portion (18) of the outer surface (14) disposed on only one of the first side (36) or the second side (34).

9. The component (10) of claim 8, wherein the component (10) is a gas turbine component (10), the first side (36) is a pressure side and the second side (34) is a suction side, and the portion (18) of the outer surface (14) is disposed on the pressure side of the outer surface (14).

10. The component (10) of claim 8, wherein the component (10) is a hot gas path component (10) of a gas turbine, and the first side (36) is a gas path side, the second side (34) is a non-gas path side, and the portion (18) of the outer surface (14) is disposed on the gas path side.

11. The component (10) of any one of claims 8 to 10, wherein the component (10) and the plurality of fiducial markers (12) comprise a single continuous material throughout the component (10) and the fiducial markers (12).

12. The component (10) of any one of claims 8 to 11, wherein the analysis region (17) includes a life-limiting region of the component (10).

13. The component (10) of any one of claims 8 to 12, wherein each fiducial marker (12) of the plurality of fiducial markers (12) partially defines a spherical surface.

14. The component (10) of any one of claims 8 to 13, wherein the plurality of fiducial markers (12) are arranged in the analysis region (17) in a matrix grid, the matrix grid having a preselected row spacing (22) and a preselected column spacing (20) and wherein the preselected row spacing (22) is not equal to the preselected column spacing (20).

15. A method (300) of evaluating a component (10), the method (300) comprising:
initially scanning (310) a plurality of fiducial markers (12) on a portion of an outer surface (14) of the component (10);
creating (320) a unique pattern for the component (10) based on the initial scan (310);
storing (330) the unique pattern in a computer memory (26);
subjecting (340) the component (10) to at least one duty cycle;
subsequently scanning (350) the plurality of fiducial markers (12) after the at least one duty cycle; and
comparing (360) the unique pattern based on the initial scan (310) to the subsequent scan (350) to measure creep strain on the component (10).
